# EUROPEAN PATENT APPLICATION

(11) **EP 0 562 793 A1**
(43) Date of publication of application: **29.09.1993**
(21) Application number: 93302140.4
(22) Date of filing: 22.03.1993
(51) Int. Cl.: H04N 1/00

(54) **Apparatus for automatic scanning of a plurality of input media**

(30) Priority: 25.03.1992 IL 101374
(71) Applicant: SCITEX CORPORATION LTD., Herzliya 46103 (IL)
(72) Inventor: Yannai, Moshe, Alfei Menashe 44851 (IL); Cohen, Ronny, Binyamina 30500 (IL); Drory, Hanan, Ra'anana 43580 (IL)
(74) Representative: Hillier, Peter

(57) **Abstract**

Apparatus for sequentially providing a scanner, having a scanning location, with a plurality of cassettes. The apparatus includes apparatus for storing the plurality of cassettes in designated locations and apparatus for moving a desired cassette between its designated location in the apparatus for storing and the scanning location of the scanner.

## Description

### FIELD OF THE INVENTION

The present invention relates generally to workpiece providing systems and to cassette providing systems for scanners in particular.

### BACKGROUND OF THE INVENTION

An operator operating a prior art scanner loads an input medium to be scanned by placing the medium into a cassette and loading the cassette into the scanner. The scanner scans the medium, producing thereby a digital representation (image) of the medium, after which the operator removes the medium. If desired, the operator can then place another input medium to be scanned into the scanner.

In scanners which enable the operator to modify the image of the medium, the scanning and image modification operations are typically foreground operations. Therefore, image modification can not occur during scanning and vice versa.

### SUMMARY OF THE INVENTION

It is an object of the present invention to provide apparatus for automatic loading of a plurality of cassettes into a scanner.

It is a further object of the present invention to provide apparatus for scanning and modifying images at one time.

It is a still further object of the present invention to provide apparatus for a plurality of users to utilize a single scanner.

There is therefore provided, in accordance with an embodiment of the present invention, apparatus for sequentially providing a scanner, having a scanning location, with a plurality of cassettes. The apparatus includes apparatus for storing the plurality of cassettes in designated locations and apparatus for moving a desired cassette between its designated location in the apparatus for storing and the scanning location of the scanner.

There is also provided, in accordance with an embodiment of the present invention, apparatus for automatically scanning a plurality of input media. The apparatus includes a) a scanner having a scanning location, b) apparatus for storing a plurality of cassettes in designated locations, wherein in each cassette is located one of the plurality of input media and c) apparatus for moving a desired cassette between its designated location in the apparatus for storing and the scanning location of the scanner, wherein the scanner scans the input medium when the cassette is located in the scanning location.

Additionally, in accordance with an embodiment of the present invention, the apparatus for storing includes at least one magazine.

Moreover, in accordance with an embodiment of the present invention, the apparatus for moving includes motion apparatus and apparatus for gripping the desired cassette. The apparatus for gripping preferably includes a finger and each cassette includes a gripping indentation into which the finger is moved during gripping.

Further, in accordance with an embodiment of the present invention, the motion apparatus moves the cassette to a scan feed slot forming part of the scanner and the apparatus for moving additionally includes apparatus for feeding the desired cassette from the scan feed slot to the scanning location.

Still further, in accordance with an embodiment of the present invention, each cassette includes apparatus for identifying size and type of the input medium and whether or not rotation of the input medium is desired.

Additionally, in accordance with an embodiment of the present invention, the apparatus for storing includes apparatus for identifying a user utilizing the apparatus for storing.

There is additionally provided, in accordance with an embodiment of the present invention, apparatus for scanning while performing image modification. The apparatus includes a) scanning apparatus for scanning an input medium and for producing a digital representation thereof, b) apparatus for storing the digital representation along with other previously scanned digital representations and c) apparatus for modifying the previously scanned digital representations while the scanning apparatus scans the input medium.

Moreover, in accordance with an embodiment of the present invention, the apparatus for scanning includes apparatus for providing a single input medium from a plurality of input media to and from the scanning apparatus.

There is further provided, in accordance with an embodiment of the present invention, apparatus for scanning utilizable by more than one user. The apparatus includes a) apparatus for storing a plurality of input media, b) apparatus for identifying the apparatus for storing as storing input media of a predetermined user, c) scanning apparatus for scanning a single input medium and d) apparatus for providing the single input medium to and from the scanning apparatus.

Additionally, in accordance with an embodiment of the present invention, the apparatus for storing includes at least one magazine.

Further, in accordance with an embodiment of the present invention, the apparatus for providing includes three-axis motion apparatus and apparatus for gripping a cassette storing the single input medium.

Still further, in accordance with an embodiment of the present invention, the apparatus for gripping includes a finger and each cassette includes a gripping indentation into which the finger is moved during gripping.

Moreover, in accordance with an embodiment of the present invention, the motion apparatus moves the cassette to a scan feed slot forming part of the scanner and the apparatus for moving additionally includes apparatus for feeding the desired cassette from the scan feed slot to the scanning location.

Finally, there is also provided, in accordance with an embodiment of the present invention, a cassette for holding a picture to be scanned by a scanner. The cassette includes a) a housing and b) apparatus for identifying size and type of the picture and whether or not rotation of the picture, within the scanner, is desired.

### BRIEF DESCRIPTION OF THE DRAWINGS

The present invention will be understood and appreciated more fully from the following detailed description taken in conjunction with the drawings in which:
Fig. 1 is a schematic illustration of a scanner and an automatic cassette loading mechanism associated therewith, constructed and operative in accordance with an embodiment of the present invention;
Fig. 2 is a schematic illustration of a cassette feeding mechanism useful in the scanner of Fig. 1;
Fig. 3 is a schematic illustration of a cassette magazine useful in the mechanism of Fig. 1;
Fig. 4A is a schematic illustration of a cassette and a gripping mechanism useful in the mechanism of Fig. 1;
Fig. 4B is a schematic illustration of a portion of Fig. 4A, as marked by the circle 4B on Fig. 4A;
Fig. 5 is a block diagram illustration of apparatus for simultaneously scanning an input medium to produce a digital image and modifying an already scanned image forming part of the scanner of Fig. 1; and
Fig. 6 is a block diagram illustration of a plurality of user workstations accessing a single scanner.

### DETAILED DESCRIPTION OF PRESENT INVENTION

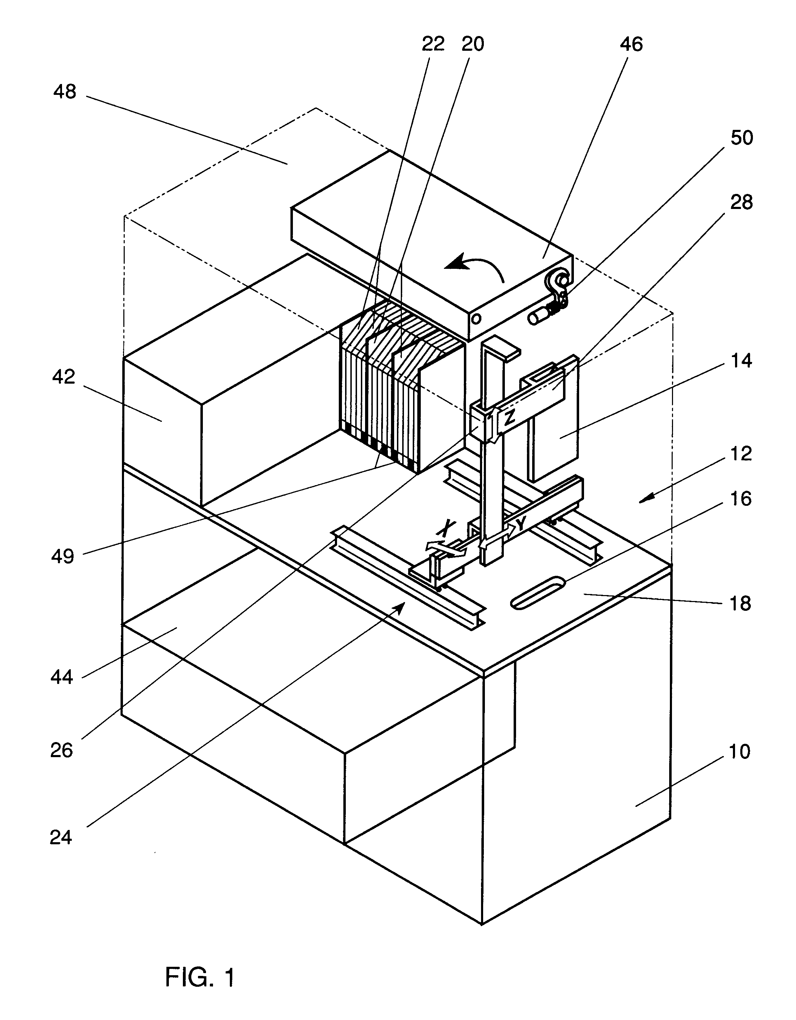

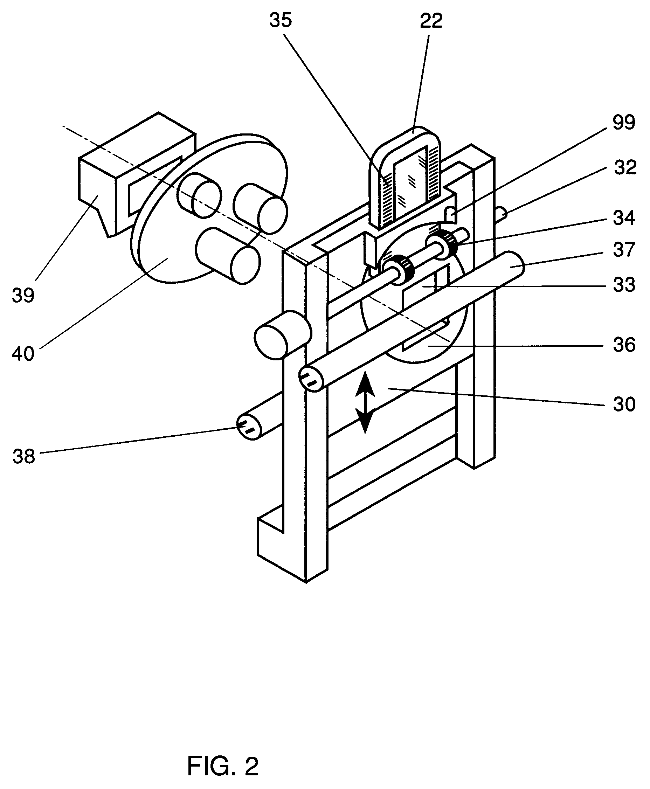

Reference is now made to Figs. 1 and 2. Fig. 1 illustrates a scanner 10, such as any suitable type of color separation scanner, and an automatic cassette loading mechanism 12 for storing and selectively loading a plurality of input media to be scanned. Fig. 2 illustrates a cassette feeding mechanism operating in conjunction with the light path of the scanner 10.

The automatic cassette loading mechanism 12 is similar in operation to the many types of workpiece providing systems known in the art. Workpiece providing systems are systems which provide one workpiece from among a plurality of prepared workpieces to a machine which subsequently operates on the workpiece.

For example, slide projectors, which sequentially illuminate a plurality of slides, typically include a loading tray in which the plurality of slides are loaded and a providing system for selecting a first slide to be illuminated, for returning the first slide to the loading tray after illumination and for selecting the next slide, consecutive with the first slide, for illumination.

The automatic cassette loading mechanism 12 of the present invention can either sequentially provide prepared cassettes, or it can provide the cassettes in any desired order.

Fig. 1 illustrates an exemplary embodiment of the present invention, where the scanner 10 receives cassettes 14 through a scanner feed slot 16 located at one side 18 of the scanner 10 and scans the cassettes by moving them up and down. It will be understood that the principles of the present invention can be applied to any type of scanner, including scanners which move the cassettes horizontally. Such a horizontal cassette translating scanner is the Smart Scanner manufactured by Scitex Corporation Ltd. of Herzlia, Israel, the assignees of the present invention.

The exemplary loading mechanism 12 typically comprises a first plurality of cassette magazines 20 each storing a second plurality of cassettes 22 and a cassette transfer mechanism 24 for transferring a single cassette 22 from its location within a cassette magazine 20 to the scanner feed slot 16 and vice versa.

The cassette transfer mechanism 24 typically comprises a three-axis translation mechanism 26 to which is attached a gripper 28.

The three-axis translation mechanism 26 moves in an X direction along the magazines 20 until reaching the location of a selected cassette 22, along a Y direction towards or away from the selected cassette 22, and along a Z direction to pick up the cassette 22 and to place it into the scanner feed slot 16.

The gripper 28 can be any suitable gripping mechanism, such as claws which open and close or an electromagnetic gripper. Whatever type of gripper 28 is utilized, the gripper 28 must grip and release the cassette 22 upon command. The cassette transfer mechanism 24 must be designed so as to accurately place the cassette 22 in both the scanner feed slot 16 and in its proper location within the magazine 20.

For a horizontal feeding scanner, the loading mechanism 12 can be placed beside the scanner 10 and the translation mechanism 26 can include an additional rotation axis for rotating the gripped cassette into an horizontal position. The scan feed slot 16, in this embodiment, is horizontally placed.

The scan feed slot 16 is typically associated with cassette movement apparatus 30 (Fig. 2) forming part of scanner 10. To accommodate the cassette loading mechanism 12, the cassette movement apparatus 30 of the scanner 10 includes a cassette feeding mechanism 32 for feeding the cassette into a scanning location 33 of apparatus 30.

In the exemplary embodiment, the cassette feeding mechanism 32 comprises two rotatable pinions (or gears) 34 which engage a "rack" 35 forming part of the cassette 22 once the cassette transfer mechanism 24 places the cassette 22 into the scan feed slot 16. Other feeding mechanisms can be optionally utilized.

The scanner shown in Fig. 2 typically comprises a cassette rotating mechanism 36 for enabling the input medium to be scanned in a plurality of rotation angles and two lamps 37 and 38 for illuminating the input medium. Lamp 37 is operative for transparencies and lamp 38 is operative for reflectives.

Also shown in Fig. 2 are an optical head 39 comprising a plurality of detectors and a lens mechanism 40 for providing a plurality of magnification levels.

Returning to Fig. 1, a control unit 42, forming part of the mechanism 12, controls the operation of the mechanism 12. The control unit 42 typically is under control of and in communication with a control unit 44 controlling the scanner 10.

The automatic cassette loading mechanism 12 is utilized as follows:
a) The scanner operator opens a door 46 of a housing 48 of the mechanism 12 and places one magazine 20 filled with cassettes 22 into an appropriate vacant location therewithin. The magazine 20 is typically provided with means for user identification, such as a bar code 49.
b) At the appropriate time, the scanner 10 commands the mechanism 12 to load a selected cassette 22 into the scanner, where the selected cassette 22 is identified by the means for user identification and by its location within the magazine 20 and the identification information is read by an appropriate sensor (not shown).
c) If, as detected by a proximity sensor (not shown), the selected cassette 22 is not available (i.e. the slot in the magazine 20 in which the cassette 22 belongs is empty), the mechanism 12 so informs the scanner 10 and waits for further instructions. Otherwise, the mechanism removes the selected cassette 22 from the magazine 20, places it into the scan feed slot 16 and informs the scanner 10 that the loading operation is complete.
d) The feeding mechanism 32 feeds the selected cassette 22 towards the scanning location 33 of the cassette movement apparatus 30.
e) The scanner 10 performs its scanning operations.
f) The scanner 10, upon finishing its operations, commands the feeding mechanism 32 to remove the selected cassette and commands the mechanism 12 to return the cassette 22 to its original position. If the location is not empty, as identified by the proximity sensor, the mechanism 12 so informs the scanner 10 and waits for instructions.

In accordance with this exemplary embodiment of the present invention, the mechanism 12 also includes means 50, such as a solenoid actuated hook, for locking the door 46 during loading and for indicating when the door 46 is open. The control unit 42 typically does not allow the cassette transfer mechanism 24 to operate when the door 46 is open.

The mechanism 12 can also include sensors (not shown) for sensing the presence of a magazine. The output of the sensors is utilized to prevent the cassette transfer mechanism 24 from accessing a magazine location if no magazine 20 is present and to prevent cassettes 22 being loaded into a magazine 20 if the magazine 20 is located within the mechanism 12.

It will be appreciated that the mechanism 12 can be utilized for a multiplicity of users. Each user can be given a magazine 20, having thereon his user identification code, which can be filled with his cassettes 22, or, if there are more users than magazines 20, each user can be given a position within a coded magazine 20. The scanner 10 can then scan the cassettes 22 whenever it is ready to do so.

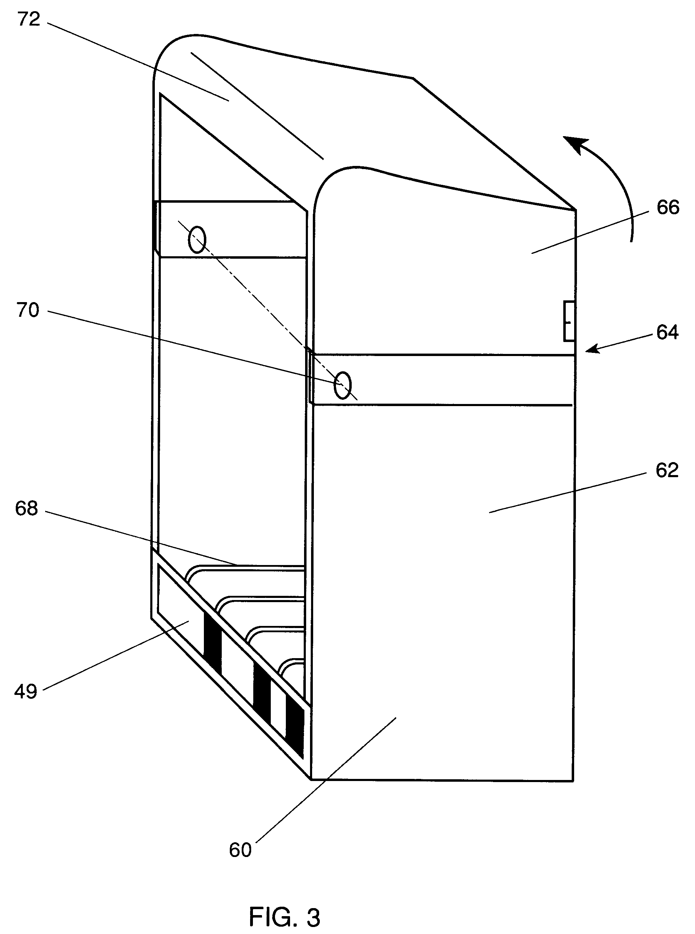

Reference is now made to Fig. 3 which illustrates one embodiment of a magazine, labelled 60, useful in the automatic cassette loading mechanism 12.

The magazine 60 typically is a rectangular cube open in the front for access by the cassette transfer mechanism 24. The magazine 60 comprises two sides 62, a back 64 and a rotating cover 66.

The magazine also typically comprises a multiplicity of separators 68 for supporting the multiplicity of cassettes 22 placed within the magazine 60. The cover 66 rotates about an axis 70 in order to remove the cover 66 and enable a user to place prepared cassettes into the magazine 60. The cover 66 can be shaped to include a handle 72 for carrying the magazine 60.

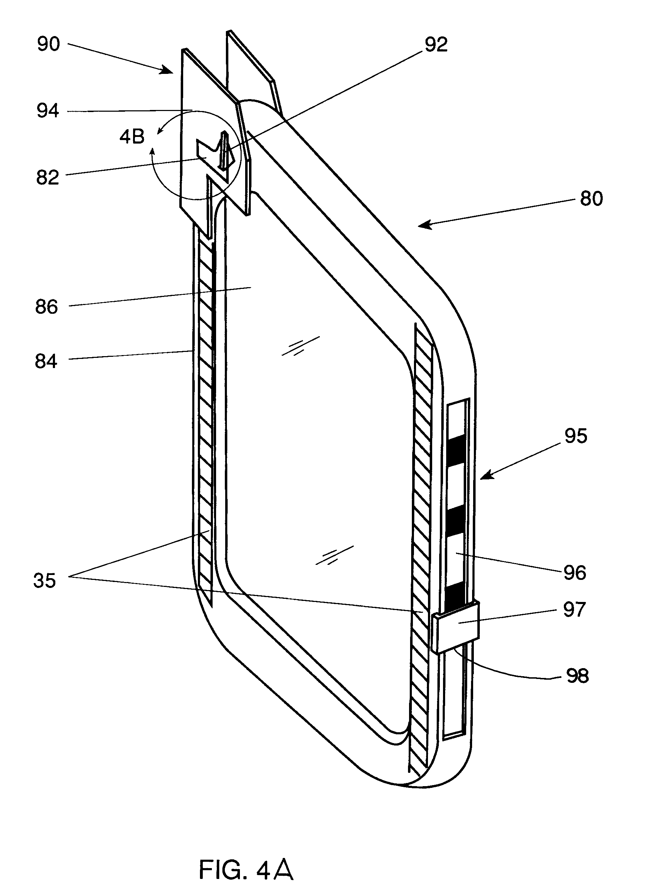

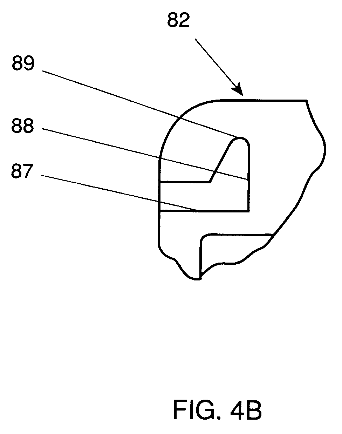

Reference is now made to Figs. 4A and 4B which schematically illustrate a cassette, labelled 80, having a gripping indentation 82. The cassette 80 comprises a frame 84 housing at least one piece of glass 86. In accordance with an embodiment of the present invention, the gripping indentation 82 is located in an upper corner of the frame 84.

The gripping indentation 82 is typically generally L-shaped having a long part 87 and a short part 88 which ends in a rounded tip 89. It is useful in conjunction with a gripper 90 formed of a finger 92 attached perpendicularly to a flat plate 94.

Included on a side of the cassette 80 is a means 95 for picture size and type identification. In this embodiment, the means is formed of a bar code 96 and a slider 97 covering a portion 98 of the bar code 96.

Bar code 96 indicates the type (reflective or transparency) and size of the input medium. The presence or absence of portion 98, created by the sliding of slider 97, indicates whether or not the cassette is to be rotated by rotating mechanism 36.

Referring briefly to Fig. 2, there is shown an identification reader 99 which reads the means for identification 95 and provides the identification information to the control unit 44.

The cassette transfer mechanism 24 typically moves the gripper 90 along the Y axis along a line defined by the long part 87 of the gripping indentation 82. The finger 92 is brought into the gripping indentation until reaching the short part 88, at which point, mechanism 24 raises the gripper 90 until reaching the rounded tip 89. In this position, the cassette 80 is "gripped" and can be removed.

Upon bringing the cassette 80 to the scan feed slot 16, the mechanism 24 lowers the cassette 80 with gripper 90 until the rack 35 engages the gears 34. The cassette 80 is now in place.

The mechanism 24 continues to lower the gripper 90 until finger 92 reaches the long part 87 of the gripper indentation 82 at which point, the mechanism 24 backs the finger 92 out of the long part 87. Once free of the gripper indentation 82, the mechanism 24 moves the gripper 90 away from the scan feed slot 16.

The cassette 80 has now been placed into the scan feed slot 16. As mentioned hereinabove, once the cassette 80 has been placed, the cassette feeding mechanism 32 loads it into the scanning location 33.

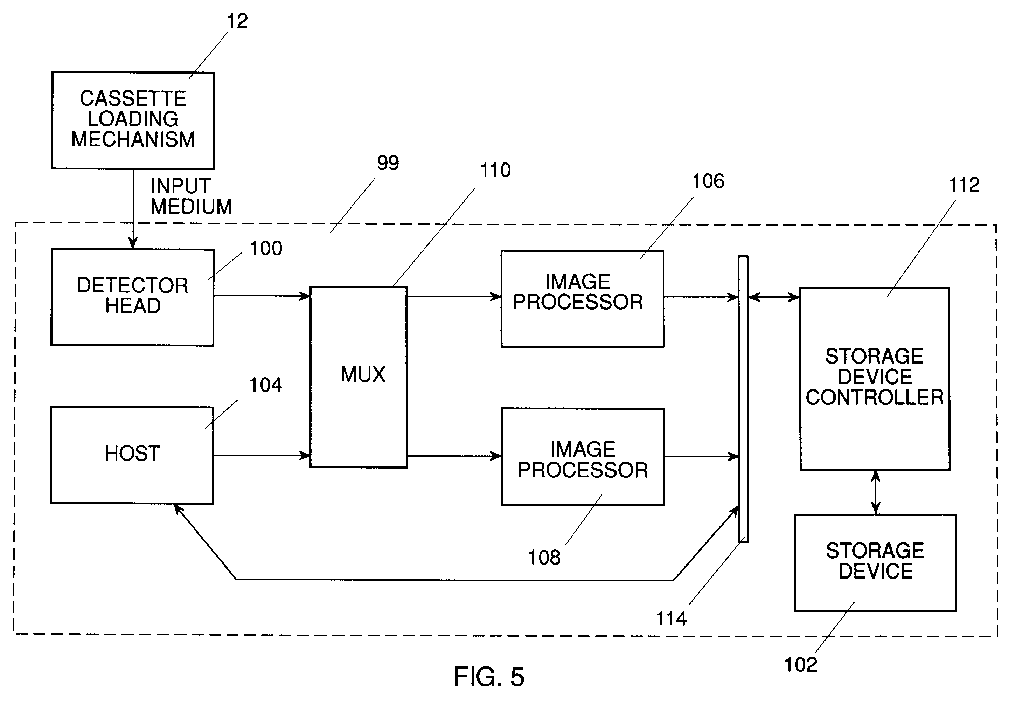

Reference is now made to Fig. 5 which illustrates apparatus 99 for simultaneously scanning an input medium and for modifying an already scanned digital image forming part of the scanner 10. The apparatus 99 is typically useful for scanners which pre-scan an input medium, store the pre-scanned image, provide the pre-scanned image to the operator for modification and then rescan the input medium using the modification instructions of the operator. In such scanners, the pre-scan is typically at a first resolution which is typically lower than a second, final scan resolution.

As in standard scanners, scanner 10 comprises a detector head and its drivers 100, such as those utilized in the Smart Scanner, for scanning an input medium, a storage device 102, such as a hard disk, for storing a digital representation (image) of the input medium as produced by the detector head 100 and a host computer 104 for modifying an already scanned image stored in storage device 102.

The apparatus 99 additionally comprises two image processors 106 and 108, such as the BIP 503D27202 and its associated buffering circuitry manufactured by Scitex Corporation Ltd., for processing the image in near real-time, thereby enabling near real-time modification of the image.

A multiplexer (MUX) 110, connected between the image processors 106 and 108 and the detector head 100 and host computer 104, selects which output from units 100 and 104 is processed by which image processor 106 or 108.

Through the operation of the two image processors 106 and 108, the apparatus 99 simultaneously scans in data from said input medium and enables an operator to modify an already scanned image.

A storage device controller 112, such as the MDC 503D23284 manufactured by Scitex Corporation Ltd., arbitrates, or time shares, (under supervision of the host computer 104) among the image processors 106 and 108 and the host computer 104 as they access storage device 102 via a system bus 999.

It will be appreciated that, as long as there are cassettes waiting to be scanned, the cassette loading mechanism 12 can continually provide an input medium to the detector head 100 and therefore, the detector head 100 can continually provide data to the image processor, for example processor 108, to which it is connected.

Therefore, the storage device controller 112 typically provides the image processor, for example processor 106, which is currently connected to the host computer 104 and operating on the already scanned image with higher priority access to storage device 102 over the image processor 108.

It will be appreciated that the apparatus 99 enables the scanning operations to be performed as a background process. The scanner 10 can pre-scan a first input medium and provide it to the operator for modification while pre-scanning the remaining input media stored in the cassettes of the cassette loading mechanism 12.

Once the operator has finished modifying the image of the first input medium, the scanner 10 can either stop pre-scanning (if it has not already finished pre-scanning the entirety of input media) and immediately rescan the first input medium or it can finish the pre-scanning and only then rescan the input media for whom the operator has finished providing modification instructions. While the scanning continues, the operator can work on any of the images which the scanner 10 has finished pre-scanning.

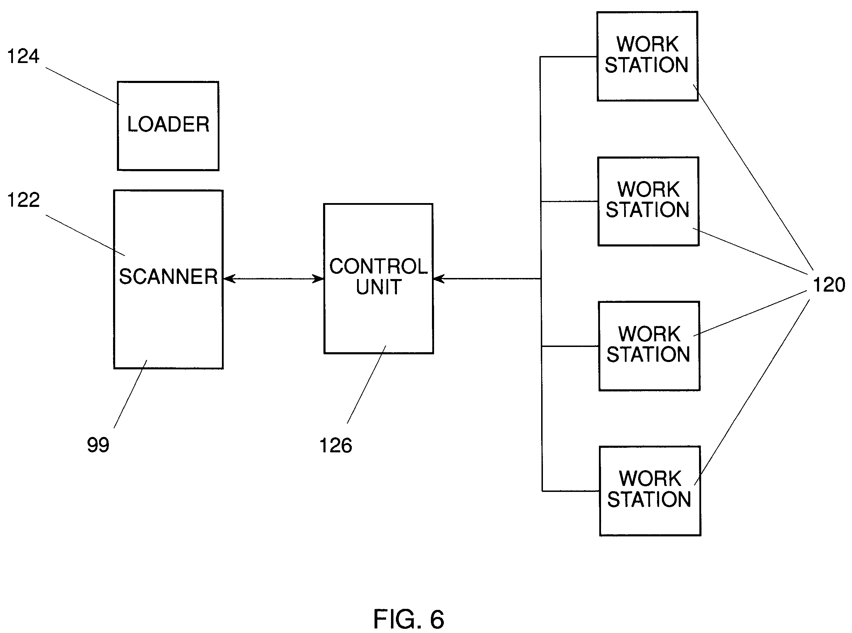

Reference is now made to Fig. 6 which illustrates a plurality of user workstations 120 operating with one scanner, labelled 122, which includes the apparatus 99 (Fig. 5) and has associated therewith one automatic cassette loading mechanism, labelled 124.

In the illustrated system, the workstations 120 are connected in parallel through a control unit 126, such as the SFL Router 501R32320 control unit manufactured by Scitex Corporation Ltd., to the scanner 122.

A user operating one of the workstations 120 provides his magazine 20 of cassettes 22 to the mechanism 124 and returns to his workstation 120. From his workstation, he can then request, through the control unit 126, that the scanner pre-scan or scan an input medium in his magazine.

The scanner identifies the magazine 20 belonging to the operator through the identification means 49, and, if nothing else has been requested, begins the requested scan. Otherwise, the requested scan is placed in a scan queue and scanned at the appropriate time.

The apparatus 99 ensures that the scan queue is scanned in the background while the operator, or operators, access and modify already scanned images

It will be appreciated by persons skilled in the art that the present invention is not limited to what has been particularly shown and described hereinabove. Rather the scope of the present invention is defined only by the claims which follow:

## Claims

1. Apparatus for sequentially providing a scanner, having a scanning location, with a plurality of cassettes, the apparatus comprising:
means for storing said plurality of cassettes in designated locations; and
means for moving a desired cassette between its designated location in said means for storing and said scanning location of said scanner.

2. Apparatus for automatically scanning a plurality of input media, the apparatus comprising:
a scanner having a scanning location;
means for storing a plurality of cassettes in designated locations, wherein one of said plurality of input media is located within each cassette; and
means for moving a desired cassette between its designated location in said means for storing and said scanning location of said scanner,
wherein said scanner scans said input medium when said cassette is located in said scanning location.

3. Apparatus according to any of the previous claims and wherein said means for storing comprises at least one magazine.

4. Apparatus according to any of the previous claims and wherein said means for moving comprises motion apparatus and means for gripping said desired cassette.

5. Apparatus according to claim 4 and wherein said means for gripping comprises a finger and each cassette comprises a gripping indentation into which said finger is moved during gripping.

6. Apparatus according to claim 4 wherein said motion apparatus moves said cassette to a scan feed slot forming part of said scanner and said means for moving additionally comprises means for feeding said desired cassette from said scan feed slot to said scanning location.

7. Apparatus according to either of claims 1 or 2 and wherein each of said cassettes comprises means for identifying size and type of said input medium and whether or not rotation of said input medium is desired.

8. Apparatus according to either of claims 1 or 2 and wherein said means for storing include means for identifying a user utilizing said means for storing.

9. Apparatus for scanning while performing image modification, the apparatus comprising:
scanning means for scanning an input medium and for producing a digital representation thereof;
means for storing said digital representation along with other previously scanned digital representations; and
means for modifying said previously scanned digital representations while said scanning means scans said input medium.

10. Apparatus according to claim 9 and including means for providing a single input medium from a plurality of input media to and from said scanning means.

11. Apparatus for scanning utilizable by more than one user, the apparatus comprising:
means for storing a plurality of input media;
means for identifying said means for storing as storing input media of a predetermined user;
scanning means for scanning a single input medium; and
means for providing said single input medium to and from said scanning means.

12. Apparatus according to claim 11 and wherein said means for storing comprises at least one magazine.

13. Apparatus according to claim 11 and wherein said means for providing comprises three-axis motion apparatus and means for gripping a cassette storing said single input medium.

14. Apparatus according to claim 13 and wherein said means for gripping comprises a finger and said cassette comprises a gripping indentation into which said finger is moved during gripping.

15. Apparatus according to claim 13 wherein said motion apparatus moves said cassette to a scan feed slot forming part of said scanner and said means for moving additionally comprises means for feeding said desired cassette from said scan feed slot to said scanning location.

16. A cassette for holding a picture to be scanned by a scanner, the cassette comprising:
a housing; and
means for identifying size and type of said picture and whether or not rotation of said picture, within said scanner, is desired.
